# FASCICULE DE BREVET EUROPEEN

(11) **EP 1 420 916 B1**
(45) Date de publication et mention de la délivrance du brevet: **14.09.2005**
(21) Numéro de dépôt: 02796288.5
(22) Date de dépôt: 12.07.2002
(51) Int. Cl.: B23K 26/067, B23K 26/14, B23K 26/06

(54) **PROCEDE ET INSTALLATION DE COUPAGE PAR FAISCEAU LASER UTILISANT UN OBJECTIF A MULTIFOCALES ET UNE TUYERE CONVERGEANTE/DIVERGEANTE**
VERFAHREN UND ANLAGE ZUM LASERSTRAHLSCHNEIDEN UNTER VERWENDUNG EINES OBJEKTIVS MIT MEHREREN BRENNWEITEN UND EINER KONVERGIERENDEN/DIVERGIERENDEN DÜSE
METHOD AND INSTALLATION FOR LASER BEAM CUTTING USING A MULTIPLE-FOCUS OBJECTIVE AND A CONVERGENT/DIVERGENT NOZZLE

(30) Priorité: 22.08.2001 FR 0110998
(43) Date de publication de la demande: 26.05.2004
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: MATILE, Olivier, F-75018 Paris (FR)
(74) Mandataire: Pittis, Olivier
(86) Numéro de dépôt international: PCT/FR2002/002478
(87) Numéro de publication internationale: WO 2003/018246

(56) Documents cités:
- EP-A- 0 458 180
- EP-A- 0 757 932
- FR-A- 2 803 549
- US-B1- 6 175 096

## Description

La présente invention concerne un procédé de coupage par faisceau laser selon le préambule de la revendication 1. Un tel procédé est décrit dans le document EP-A-929376.

Classiquement, lors de la mise en oeuvre d'un procédé de découpe d'un matériau par faisceau laser, le gaz d'assistance, dont le rôle premier est de favoriser l'éjection par effet cinétique du matériau fondu par le faisceau laser, est amené par une tuyère dont la géométrie interne en association avec la pression d'alimentation en gaz de cette tuyère, détermine les caractéristiques de l'écoulement gazeux au-dessus et dans la saignée de coupe et, en particulier, la pression dynamique à l'entrée de la saignée de découpe, c'est-à-dire au niveau de la surface supérieure du matériau en regard de la buse de soudage.

Par ailleurs, lorsque l'on souhaite canaliser efficacement le gaz d'assistance vers la pièce de travail à couper, il est connu d'utiliser une tuyère à profil interne axisymétrique de type convergent/divergent, encore appelée tuyère de Laval, car une telle tuyère permet d'accélérer considérablement le gaz qu'elle délivre grâce à une détente supersonique se produisant dans le divergent de la buse générant ainsi une pression dynamique supérieure à celle obtenue avec une buse cylindrique pour une même pression d'alimentation et un même débit de gaz.

Cependant, jusqu'à présent, compte tenu de la géométrie particulière de ce type de tuyère, en particulier sa plus grande longueur par rapport à une buse de type cylindrique classique, et la position nécessairement éloignée de la saignée par rapport à la section la plus faible de la buse (section au col), il est difficile, voire impossible, de loger la caustique, c'est-à-dire l'enveloppe extérieure d'un faisceau classique délivré par un laser de puissance (Mode TEM 00 ou bien TEM 01*), dans l'alésage de ladite tuyère, sans contact faisceau/paroi de tuyère, tout en maintenant une position correcte du point de focalisation par rapport à la pièce à découper.

Il est à noter qu'un contact entre le faisceau laser et la paroi de la buse engendrerait un échauffement de cette paroi pouvant conduire à une altération accélérée de celle-ci, voire à sa dégradation quasi-totale dans certains cas, nécessitant alors son remplacement fréquent ou anticipé.

De ce fait, ce type de tuyère ne peut être utilisé en coupage laser qu'au prix de grandes difficultés techniques ou d'un fonctionnement non optimal.

Ainsi, l'utilisation d'une tuyère convergente/divergente avec un faisceau laser classique conduit :
- soit à utiliser des optiques à longueur focale très élevée pour permettre à la caustique du faisceau de s'insérer dans la tuyère, sans contact avec les parois, ce qui conduit à ne disposer que d'une faible densité de puissance au point de focalisation,
- soit à placer le point de focalisation à une distance non optimale de la pièce à découper et en particulier trop haut, c'est-à-dire trop proche de la surface supérieure de la pièce à couper, laquelle est la surface située en regard de la buse délivrant le faisceau laser,
- soit à utiliser une tuyère convergente/divergente avec une section très large au niveau du col, ce qui conduit à augmenter considérablement les consommations de gaz d'assistance.

Le but de la présente invention est de proposer un procédé de coupage par faisceau laser avec gaz d'assistance permettant de tirer profit des avantages de l'utilisation d'une tuyère de Laval mais sans en avoir les inconvénients et ce, de manière à pouvoir augmenter la vitesse de coupage par rapport à un procédé classique.

La solution de l'invention est alors un procédé de coupage d'un matériau (une pièce à couper) par faisceau laser (3, 13, 23) mettant en oeuvre au moins un moyen optique à multifocales (1) pour focaliser le faisceau laser (3, 13, 23) en plusieurs points de focalisation distincts (PF1, PF2) en combinaison avec une tuyère convergente/divergente (2) au travers de laquelle chemine ledit faisceau laser (3, 13, 23) et circule un flux de gaz d'assistance du faisceau laser.

Selon le cas, le procédé de l'invention peut comprendre l'une ou plusieurs des caractéristiques techniques suivantes :
- le moyen optique est agencé de manière à obtenir au moins un premier point de focalisation (PF1) se positionnant à proximité de la surface supérieure de la pièce à découper, de préférence en coïncidence avec ladite surface supérieure, ou dans l'épaisseur de la pièce à découper dans une région voisine de ladite surface supérieure et un deuxième point de focalisation (PF2) se positionnant à proximité de la surface inférieure de la pièce à couper et dans l'épaisseur de celle-ci ou en dehors de celle-ci.
- le moyen optique divise le faisceau laser en un sous-faisceau central et en un sous-faisceau périphérique, le sous-faisceau central étant focalisé en le deuxième point de focalisation (PF2) et le sous-faisceau périphérique étant focalisé en le premier point de focalisation (PF1).
- le gaz d'assistance est choisi parmi l'oxygène, l'azote, l'argon, l'hélium, l'hydrogène, le dioxyde de carbone et leurs mélanges.
- le matériau est une pièce en acier non allié ou faiblement allié, en acier inoxydable, en acier revêtu, en aluminium ou en alliage d'aluminium.
- le moyen optique multi-focales est choisi parmi les lentilles, les miroirs et leurs combinaisons, de préférence une lentille à bifocales ou une combinaison de plusieurs lentilles.
- l'épaisseur de la pièce à couper est comprise entre 0.8 mm et 20 mm, de préférence de 2 à 12 mm.
- la pièce à couper est choisie parmi les plaques, les tôles et les tubes.
- le gaz est à une pression de 0,5 à 30 bars, de préférence de 1 à 28 bars.

L'invention porte aussi sur une installation de coupage par faisceau laser assisté d'un gaz d'assistance, susceptible de mettre en oeuvre un procédé selon l'invention, comprenant :
- au moins un générateur laser pour générer au moins un faisceau laser,
- au moins un moyen optique à multifocales pour scinder ledit faisceau laser en au moins deux sous-faisceaux laser en focalisant lesdits sous-faisceaux laser en au moins un premier point de focalisation (PF1) et un deuxième point de focalisation (PF2) distincts l'un de l'autre,
- au moins une tuyère convergente/divergente traversée par lesdits sous-faisceaux laser, et
- au moins une source de gaz d'assistance pour alimenter ladite tuyère convergente/divergente en gaz d'assistance.

Comme Il ressort de ce qui précède, l'invention repose sur l'utilisation en combinaison d'une tuyère convergente/divergente et d'une lentille ou un objectif multi-focales, c'est-à-dire à plusieurs longueurs focales, ce qui permet de combiner avantageusement les avantages de ces deux dispositifs, en particulier par une meilleure répartition du flux thermique généré par l'impact du faisceau issu d'une lentille, d'une optique ou d'un objectif à multi-focales et par un effet cinétique amélioré résultant de l'utilisation de la tuyère à profil interne convergent/divergent.

La caustique peut, dans le cas de l'invention, s'inscrire parfaitement dans l'alésage de la tuyère sans risque de venir au contact des parois car la répartition du faisceau laser dans l'espace se trouve changée de par l'utilisation d'une lentille, un miroir, une optique ou un objectif à multi-focales.

Par lentille, miroir, optique ou objectif à multi-focales, on entend un ou plusieurs dispositifs optiques permettant de focaliser en synchronisme plusieurs points de focalisation, en général deux points distincts situés sur l'axe de l'orifice de la tuyère, par fractionnement du faisceau laser principal émis par la source laser de puissance, par exemple un laser CO₂ ou Nd :YAG, en plusieurs (habituellement deux) sous-faisceaux se croisant, comme décrit par le document EP-A-929376, c'est-à-dire que le sous-faisceau central est focalisé en-dessous du sous-faisceau périphérique, dans l'épaisseur de la pièce à couper.

Le principe de fonctionnement d'un dispositif ou moyen optique à multi-focales est schématiquement le suivant ; toutefois, pour plus de précision on pourra se reporter au document EP-A-929376 (=WO 98/14302).

Le faisceau laser principal délivré par un générateur de faisceau laser est scindé en typiquement deux sous-faisceaux au moyen d'un moyen optique à bifocales de sorte d'obtenir un premier point de focalisation PF1 et un deuxième point de focalisation PF2 situés sur l'axe longitudinal de la buse laser.

Le premier point de focalisation PF1 issus de l'angle de convergence le plus grand (sous-faisceau périphérique) obtenu avec le moyen optique à bifocales se positionne à proximité de la surface supérieure de la pièce à découper, de préférence en coïncidence avec ladite surface supérieure ou dans l'épaisseur du matériau dans une région voisine de ladite surface supérieure.

Par ailleurs, le deuxième point de focalisation PF2 issus de l'angle de convergence le plus petit (sous-faisceau central) obtenu avec ledit moyen optique à bifocales se positionne à proximité de la surface inférieure de la pièce dans l'épaisseur du matériau ou en dehors de celle-ci.

En d'autres termes, les sous-faisceau périphérique et sous-faisceau central sont coaxiaux mais d'angles de convergence différents.

Les angles de convergences à sélectionner pour chacun des sous-faisceaux peut être choisi empiriquement par l'homme du métier en fonction notamment de la longueur et de la géométrie de la buse (tuyère) équipant le dispositif de coupage par laser, de l'épaisseur du matériau à couper, du choix du site de focalisation de chacun des points...

### Exemples comparatifs

A titre d'exemples, les Tableaux I et II ci-après permettent de comparer les résultats obtenus avec différentes combinaisons d'optique (mono ou multi-focales) et de buse (tuyère cylindrique ou tuyère convergente/divergente), lors de la mise en oeuvre d'un procédé de coupage par faisceau laser avec gaz d'assistance utilisant ces diverses associations lentille/tuyère.

Lors de ces essais, on a coupé une plaque d'acier inoxydable de 3 mm d'épaisseur avec un faisceau laser délivré par un générateur laser de type CO₂ de 1500 W de puissance en utilisant de l'azote pur en tant que gaz d'assistance du faisceau laser et avec différentes combinaisons de lentille/tuyère, comme détaillé dans les Tableaux I et II.

Les Essais A à D du Tableau I sont réalisés en conservant la pression et le débit du gaz de coupe constants (débit = 15 m³/h), alors que ceux (Essais E à H) consignés dans le Tableaux II sont réalisés en conservant la vitesse de coupe constante (= à 2,2 m/min).

Toutes les autres conditions (telles que ; distances buse/pièce, positions de points de focalisation, durée de pré-gaz et de post-gaz...) opératoires sont égales par ailleurs.

Le gaz utilisé est de l'azote disponible auprès de la société L'AIR LIQUIDE sous la référence commerciale LASAL 2001

**Tableau I :**

| Coupe à pression et débit de gaz constants | | | | |
|---|---|---|---|---|
| | Essai A Art Antérieur | Essai B Art Antérieur | Essai C Art Antérieur | Essai D Invention |
| Type de Lentille | Lentille monofocale classique | Lentille monofocale classique | Lentille bifocale | Lentille bifocale |
| Type de Tuyère | Convergente | Convergente/Divergente | Convergente | Convergente/Divergente |
| Gaz de Coupe | Azote | Azote | Azote | Azote |
| Vitesse de Coupe | 2,2 m/min | Non réalisable | 2,7 m/min | 3,0 m/min |
| Consommation de gaz | 15 m³/h | Non réalisable | 15 m³/h | 15 m³/h |

**Tableau II :**

| Coupe à vitesse de coupe constante | | | | |
|---|---|---|---|---|
| | Essai E Art Antérieur | Essai F Art Antérieur | Essai G Art Antérieur | Essai H Invention |
| Type de Lentille | Lentille monofocale classique | Lentille monofocale classique | Lentille bifocale | Lentille bifocale |
| Type de Tuyère | Convergente | Convergente/Divergente | Convergente | Convergente/Divergente |
| Gaz de Coupe | Azote | Azote | Azote | Azote |
| Vitesse de Coupe | 2,2 m/min | Non réalisable | 2,2 m/min | 2,2 m/min |
| Consommation de gaz | 15 m³/h | Non réalisable | 14 m³/h | 10 m³/h |

Ces essais mettent clairement en évidence qu'en utilisant une combinaison selon l'invention (optique bifocales/tuyère de Laval) en découpe par faisceau laser, on obtient soit une augmentation de la vitesse de coupe, lorsque l'on met en oeuvre des débits identiques à ceux utilisés avec un dispositif classique, soit une diminution de la consommation de gaz d'assistance nécessaires, pour une vitesse de coupe identique à celle utilisée avec un dispositif classique.

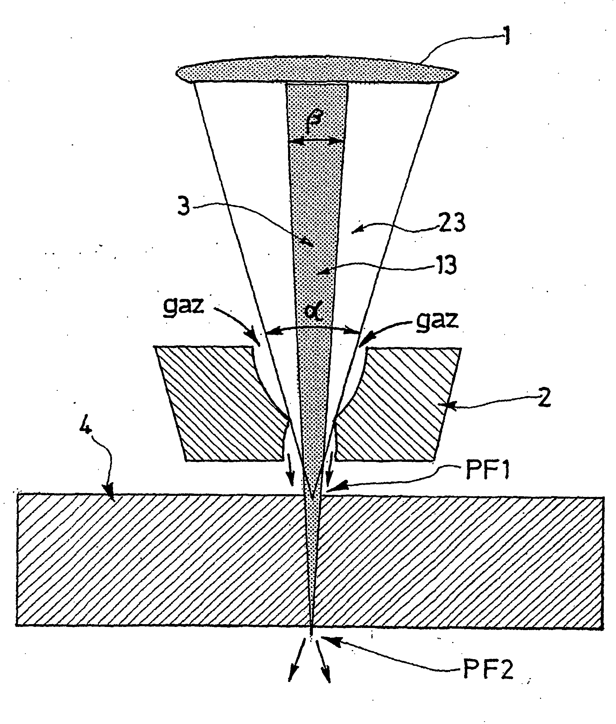

Sur la figure ci-jointe, on a schématisé la tête de coupe d'une installation de coupage laser selon l'invention comprenant en combinaison un ou plusieurs moyens optiques 1, transparents ou réfléchissants, par exemple une lentille à bifocales permettant d'obtenir en synchronisme deux points de focalisation PF1, PF2 distincts à partir d'un faisceau laser 3 principal scindé en deux sous-faisceaux par ladite lentille 1, et d'une tuyère de Laval à profil interne convergent/divergent 2 pour permettre de découper une pièce 4.

Une telle installation comprend au moins un générateur laser de type CO₂ ou de type Nd :YAG pour générer le faisceau laser 3, une buse 2 convergente/divergente délivrant le gaz d'assistance et traversée par les deux sous-faisceaux 13, 23 laser issus de la scission du faisceau laser 3 principal, au moins un moyen optique 1 pour scinder le faisceau laser 3 en un premier sous-faisceau laser 13 et en un second sous-faisceau laser 23 de manière à le focaliser en deux points PF1, PF2 de focalisation, et au moins une source de gaz d'assistance du faisceau laser alimentant la buse 2 en gaz d'assistance, l'introduction du gaz d'assistance dans la buse 2 se faisant classiquement par un ou plusieurs orifices d'entrée de gaz.

Des moyens optiques 1 de type lentilles à plusieurs points de focalisation utilisables dans le cadre de la présente invention sont décrits dans le document WO-A-98/14302 et accessible commercialement auprès de la société V&S.

Toutefois, d'autres moyens optiques peuvent aussi être utilisés mais à condition que ces moyens optiques permettent de focaliser deux points de focalisation PF1 et PF2 tels que le premier point de focalisation PF1 issus de l'angle de convergence ie plus grand, ici l'angle a du sous-faisceau 23, se positionne à proximité de la surface supérieure de la pièce 4 à découper, de préférence en coïncidence avec ladite surface supérieure ou dans l'épaisseur du matériau.dans une région voisine de ladite surface supérieure, alors que le deuxième point de focalisation PF2 issus de l'angle de convergence le plus petit, ici l'angle β, du sous-faisceau 13, se positionne à proximité de la surface inférieure de la pièce 14 dans l'épaisseur du matériau ou en dehors de celle-ci.

Ce type de focalisation est aussi appelé focalisation croisée car les deux sous-faisceaux se croisent

Comme expliqué ci-dessus, la tuyère 2 est une tuyère de Laval à profil interne convergent/divergent ayant par exemple un diamètre au col de 0,5 mm à 3 mm et une longueur de convergent/divergent de 1 mm à 6 mm. De telles tuyères, au profil interne adapté a la géométrie d'un faisceau à multiple points de focalisation et aux conditions de pression/débit recherchées, sont industriellement réalisables par des moyens conventionnels d'usinage.

La présente invention est applicable à la découpe des aciers non alliés et faiblement alliés, des aciers inoxydables, des aciers revêtus, de l'aluminium et des alliages d'aluminium.

## Revendications

1. Procédé de coupage d'un matériau par faisceau laser (3, 13, 23) mettant en oeuvre au moins un moyen optique à multifocales (1) pour focaliser le faisceau laser (3, 13, 23) en plusieurs points de focalisation distincts (PF1, PF2) en combinaison avec une tuyère (2) au travers de laquelle chemine ledit faisceau laser (3, 13, 23) et circule un flux de gaz d'assistance du faisceau laser, où:
- le moyen optique divise le faisceau laser (13) en un sous-faisceau central (13) et en un sous-faisceau périphérique (23), le sous-faisceau central (13) étant focalisé en un deuxième point de focalisation (PF2) et le sous-faisceau périphérique (23) étant focalisé en un premier point de focalisation (PF1), et
- le moyen optique est agencé de manière à obtenir le premier point de focalisation (PF1) se positionnant en coïncidence avec la surface supérieure de la pièce ou dans l'épaisseur de la pièce à découper dans une région voisine de ladite surface supérieure, et le deuxième point de focalisation (PF2) se positionnant à proximité de la surface inférieure de la pièce à couper et dans l'épaisseur de celle-ci,
**caractérisé e**n **ce que** la tuyère est une tuyère convergente/divergente.

2. Procédé selon la revendication 1, **caractérisé en ce que** le moyen optique à multi-focales est choisi parmi les lentilles, les miroirs et leurs combinaisons.

3. Procédé selon l'une des revendications 1 ou 2, **caractérisé en ce que** le moyen optique est une lentille à bifocales ou une combinaison de plusieurs lentilles.

4. Procédé selon l'une des revendications 1 à 3, **caractérisé en ce que** le gaz d'assistance est choisi parmi l'oxygène, l'azote, l'argon, l'hélium, l'hydrogène, le dioxyde de carbone et leurs mélanges.

5. Procédé selon l'une des revendications 1 à 4, **caractérisé en ce que** le matériau est une pièce en acier non allié ou faiblement allié, en acier inoxydable, en acier revêtu, en aluminium ou en alliage d'aluminium.

6. Procédé selon l'une des revendications 1 à 5, **caractérisé en ce que** l'épaisseur de la pièce à couper est comprise entre 0.8 mm et 20 mm.

7. Procédé selon l'une des revendications 1 à 6, **caractérisé en ce que** l'épaisseur de la pièce à couper est comprise entre 2 à 12 mm.

8. Procédé selon l'une des revendications 1 à 7, **caractérisé en ce que** la pièce à couper est choisie parmi les plaques, les tôles et les tubes.

9. Procédé selon l'une des revendications 1 à 8, **caractérisé en ce que** le gaz est à une pression de 0,5 à 30 bars.

10. Procédé selon l'une des revendications 1 à 9, **caractérisé en ce que** le gaz est à une pression de 1 à 28 bars.

## Patentansprüche

1. Verfahren zum Schneiden eines Werkstoffs durch Laserstrahl (3, 13, 23), das mindestens ein multifokales optisches Mittel (1) anwendet, um den Laserstrahl (3, 13, 23) auf mehrere getrennte Fokussierungspunkte (PF1, PF2) zu fokussieren, kombiniert mit einer Düse (2), durch welche der Laserstrahl (3, 13, 23) läuft und durch welche ein Hilfsgasstrom des Laserstrahls zirkuliert, wobei
- das optische Mittel den Laserstrahl (13) in einen zentralen Unterstrahl (13) und in einen peripheren Unterstrahl (23) unterteilt, wobei der zentrale Unterstrahl (13) auf einen zweiten Fokussierungspunkt (PF2) fokussiert und der periphere Unterstrahl (23) auf einen ersten Fokussierungspunkt (PF1) fokussiert ist, und
- das optische Mittel so eingerichtet ist, dass ein erster Fokussierungspunkt (PF1) erzielt wird, der sich mit der oberen Fläche des Teils oder in der Stärke des zu schneidenden Teils in einer Region in der Nähe der oberen Fläche positioniert, und so dass sich der zweite Fokussierungspunkt (PF2) in der Nähe der unteren Fläche des zu schneidenden Teils und in deren Stärke positioniert,
**dadurch gekennzeichnet, dass** die Düse eine konvergierende/divergierende Düse ist.

2. Verfahren nach Anspruch 1, **dadurch gekennzeichnet, dass** das multifokale optische Mittel aus Linsen, Spiegeln und ihren Kombinationen ausgewählt ist.

3. Verfahren nach einem der Ansprüche 1 oder 2, **dadurch gekennzeichnet, dass** das optische Mittel eine bifokale Linse oder eine Kombination mehrerer Linsen ist.

4. Verfahren nach einem der Ansprüche 1 bis 3, **dadurch gekennzeichnet, dass** das Hilfsgas ausgewählt wird aus Sauerstoff, Stickstoff, Argon, Helium, Wasserstoff, Kohlenstoff und ihren Gemischen.

5. Verfahren nach einem der Ansprüche 1 bis 4, **dadurch gekennzeichnet, dass** der Werkstoff ein Stück aus unlegiertem oder schwach legiertem Stahl, aus nicht rostendem Stahl, aus beschichtetem Stahl, aus Aluminium oder aus Aluminiumlegierung ist.

6. Verfahren nach einem der Ansprüche 1 bis 5, **dadurch gekennzeichnet, dass** die Stärke des zu schneidenden Teils zwischen 0,8 mm und 20 mm liegt.

7. Verfahren nach einem der Ansprüche 1 bis 6, **dadurch gekennzeichnet, dass** die Stärke des zu schneidenden Teils zwischen 2 und 12 mm liegt.

8. Verfahren nach einem der Ansprüche 1 bis 7, **dadurch gekennzeichnet, dass** das zu schneidende Werkstück aus Platten, Blechen und Rohren ausgewählt wird.

9. Verfahren nach einem der Ansprüche 1 bis 8, **dadurch gekennzeichnet, dass** das Gas einen Druck von 0,5 bis 30 bar hat.

10. Verfahren nach einem der Ansprüche 1 bis 9, **dadurch gekennzeichnet, dass** das Gas einen Druck von 1 bis 28 bar hat.

## Claims

1. Method of cutting a material by a laser beam (3, 13, 23) employing at least one multiple-focus optical means (1) to focus the laser beam (3, 13, 23) at several separate focal points (FP1, FP2) in combination with a nozzle (2) through which said laser beam (3, 13, 23) travels and a stream of laser-beam assistance gas flows, in which:
- the optical means splits the laser beam (13) into a central sub-beam (13) and a peripheral sub-beam (23), the central sub-beam (13) being focused at a second focal point (FP2) and the peripheral sub-beam (23) being focused at a first focal point (FP1); and
- the optical means is designed so as to obtain the first focal point (FP1), which is positioned so as to coincide with the upper surface of the workpiece, or in the thickness of the workpiece to be cut in a region close to said upper surface, and the second focal point (FP2) which is positioned near the lower surface of the workpiece to be cut and in the thickness of the latter,
**characterized in that** the nozzle is a convergent/divergent nozzle.

2. Method according to Claim 1, **characterized in that** the multiple-focus optical means is selected from lenses, mirrors and combinations thereof.

3. Method according to either of Claims 1 and 2, **characterized in that** the optical means is a bifocal lens or a combination of several lenses.

4. Method according to one of Claims 1 to 3, **characterized in that** the assistance gas is selected from oxygen, nitrogen, argon, helium, hydrogen, carbon dioxide and mixtures thereof.

5. Method according to one of Claims 1 to 4, **characterized in that** the material is a workpiece made of nonalloy or low-alloy steel, stainless steel, clad steel, aluminium or an aluminium alloy.

6. Method according to one of Claims 1 to 5, **characterized in that** the thickness of the workpiece to be cut is between 0.8 mm and 20 mm.

7. Method according to one of Claims 1 to 6, **characterized in that** the thickness of the workpiece to be cut is between 2 and 12 mm.

8. Method according to one of Claims 1 to 7, **characterized in that** the workpiece to be cut is selected from plates, sheets and tubes.

9. Method according to one of Claims 1 to 8, **characterized in that** the gas is at a pressure of 0.5 to 30 bar.

10. Method according to one of Claims 1 to 9, **characterized in that** the gas is at a pressure of 1 to 28 bar.
